# EUROPEAN PATENT SPECIFICATION

(11) **EP 3 718 712 B1**
(45) Date of publication and mention of the grant of the patent: **01.11.2023**
(21) Application number: 20167020.5
(22) Date of filing: 31.03.2020
(51) Int. Cl.: B25J 15/00, B25J 11/00, B25J 15/02

(54) **VARIABLE ADAPTATION GRIPPING SYSTEM**
GREIFSYSTEM MIT VARIABLER ANPASSUNG
SYSTÈME DE PRÉHENSION À ADAPTATION VARIABLE

(30) Priority: 04.04.2019 IT 201900005096
(43) Date of publication of application: 07.10.2020
(73) Proprietor: MEC S.r.l., 38050 Scurelle (TN) (IT); Gilli, Walter, 38041 Albiano (Trento) (IT); Pisetta, Remo, 38041 Albiano (Trento) (IT)
(72) Inventor: GILLI, Walter, 38041 Albiano TN (IT); PISETTA, Remo, 38041 Albiano TN (IT); BALDESSARI, Claudio, 38050 Novaledo TN (IT)
(74) Representative: Manfrin, Marta

(56) References cited:
- JP-A- H1 080 890
- JP-A- H06 190 764
- JP-A- S57 201 194
- JP-A- S59 201 778
- JP-A- 2002 321 184

## Description

The present disclosure refers in general to a gripping system for the handling and processing of blocks of material. In particular, the present disclosure refers to a variable adaptation gripping system for gripping, handling and cutting blocks of material, especially of irregular shape and variable dimensions.

The gripping systems generally comprise a robotic arm in turn connected to a gripping head having a pair of jaws adapted to form a gripper for gripping or holding a block of material to be moved or processed. Each of the jaws transmits a clamping force to the block of material, perpendicular to the main development direction of the jaw and opposite to the force of the other jaw, so as to exert a gripping action on said block of material.

Traditionally, the jaws of the known gripping heads have non-deformable and substantially flat gripping portions. This geometry makes it particularly difficult to exercise a firm grip on objects of irregular dimensions.

The author of the present disclosure has noted that the geometry of the gripping portions of the known jaws makes that, in the case of blocks of material of irregular shape, i.e. blocks of material characterized by protrusions or recesses on its external surface, the clamping force exerted by the jaws on the block of material is applied only to a point of contact between each jaw and the external surface of the block of material. In other words, due to the structure of the jaws, in the known gripping heads the gripping surface, or the contact surface between the jaws and the block of material, can be considerably reduced in the event of irregularity of the block of material itself. In other words, the known grippers are not equipped with mechanisms capable of adapting to the configuration of the object to be lifted.

This involves the risk that the block of material moves with respect to the jaws during its handling and/or processing. In particular, if the block of material held between the jaws have to be split or cut by exerting, at one end of the block of material protruding from the jaws, a splitting force parallel to the clamping forces, said block of material will tend to rotate and therefore to incline within the space between the jaws. Consequently, even the cut, or split, performed on the material will be inclined, resulting in greater shrinkage and requiring further subsequent processing to "straighten" said cut.

The prior art is represented by JP2002321184A, JPS57201194A, JPS59201778A, JPH1080890A and JPH06190764A.

In light of these premises, a technical problem underlying this disclosure lies in making available a gripping head, a method of gripping a block of material, a robot, a cutting apparatus and a method for cutting a block of material, wherein the gripping surface is as big as possible regardless of the irregularities of the blocks of material and/or of obtaining further advantages.

This is achieved by providing a gripping head, a method of gripping a block of material, a robot, a cutting apparatus and a method of cutting a block of material as defined in the respective claims 1, 13, 15, 16 and 19. Secondary characteristics of the present disclosure are defined in the respective dependent claims.

The gripping head according to the present disclosure is adapted for gripping a block of material and comprises a pair of jaws, each of which extends at least along a longitudinal direction and comprises a gripping portion for gripping the block of material. In other words, the gripping head comprises a pair of jaws wherein each jaw has a main development direction coinciding with the longitudinal direction. Furthermore, the gripping portion of at least one of the jaws comprises a plurality of first shaped elements placed side by side, or arranged side by side, to form a first row of first shaped elements along the longitudinal direction and a plurality of first variable empty spaces each interposed between two first shaped elements. In other words, the gripping portion comprises a multiplicity of first shaped elements arranged side by side in a longitudinal direction so that between two first consecutive shaped elements there is a first variable empty space.

The gripping portion of at least one of the jaws further comprises a plurality of second shaped elements configured to modify the gripping portion of the jaw and placed one beside another, or side by side, to form a second row of second shaped elements along the longitudinal direction and a plurality of second variable empty spaces each interposed between two second shaped elements. In other words, the gripping portion comprises a plurality of second shaped elements placed side by side in a longitudinal direction so that between two consecutive second shaped elements there is a second variable empty space. Advantageously therefore, the second shaped elements are configured to modify the gripping portion of the gripping head of at least one of the two jaws according to the irregularities of the block of material to be grasped. More particularly, the second shaped elements allow to modify the gripping surface of the jaw according to the shape and/or the dimensions and/or the irregularities of the block of material. In other words, the gripping surface of the gripping head can be modified according to the irregularities of the block of material to be grasped.

Furthermore, the profile of the first shaped elements is such as to be complementary to the profile of the second shaped elements and the first row of shaped elements and the second row of second shaped elements are staggered with respect to each other and one or each of the second elements shaped is at least partially housed in a respective variable empty space of the first variable empty spaces and one or each of the first shaped elements is at least partially housed in a respective variable empty space of the second variable empty spaces. In other words, the profile of the first shaped elements is complementary to the profile of the second shaped elements so that one or each of these second shaped elements is arranged at least partially in one of the first variable empty spaces defined by two first consecutive shaped elements. In other words, the profile of the shaped elements is such as to allow one or each of said second shaped elements to be housed at least partially in one or each of the variable empty spaces defined by two first consecutive shaped elements and vice versa.

The second shaped elements are also movable along at least one transverse direction, orthogonal to the longitudinal direction, and a translation of the second shaped elements along this transverse direction is capable of causing a translation of the first shaped elements at least in the longitudinal direction and an extension or restriction of the first variable empty spaces and a variation of the entity of the housing of the second shaped elements within the first variable empty spaces. Advantageously therefore, the conformation of the first and second shaped elements and the arrangement of the first shaped elements with respect to the second shaped elements is such as to allow a displacement of the second shaped elements along the transverse direction so that the gripping surface, or contact surface, of the jaw with the block of material is able to follow the profile of the block of material itself. In other words, the shape and/or dimensions and/or irregularities of the block of material cause, during the gripping of the block of material itself by the jaws, a movement in transverse direction of the second shaped elements. This displacement in turn causes a movement of the first shaped elements in the longitudinal direction.

According to a preferred aspect of the present disclosure, the at least one of the jaws comprises a containment chamber configured to contain the first and second shaped elements. This containment chamber has a bottom wall on which the first shaped elements rest in a sliding way, two side walls on which two of the second shaped elements rest in a sliding way and a base wall configured to act as an end of stroke to the movement of the second elements shaped. In other words, the containment chamber defines a region within which the first and second shaped elements can move. It follows that the containment chamber defines a region within which the first and second shaped elements can move.

According to a further aspect of the present disclosure, the at least one of the jaws of the pair of jaws of the gripping head comprises a plurality of thrust elements, each of which is in contact with, or rests on, one of the second shaped elements and extends mainly along the transverse direction. In addition, each of these thrust elements protrudes outside the containment chamber. According to this aspect, the thrust elements allow the movement of the second shaped elements inside the containment chamber according to the shape and/or dimensions and/or irregularities of the block of material.

According to a further preferred aspect of the present disclosure, each of the thrust elements comprises a support base facing towards one of the second shaped elements, and a contact base, opposite to the support base, configured to come into contact with the block of material. In other words, the thrust elements and in particular the contact base of the thrust elements define the contact surface of the jaw with the block of material. Furthermore, the contact bases of the thrust elements, when placed side by side to each other, form a substantially continuous surface. According to this preferred aspect, the contact bases allow to maximize the contact surface between the jaw and the block of material.

According to a further preferred aspect of the present disclosure, the first and second shaped elements have a tapered profile. It follows that the second shaped elements can be at least partially housed in the first variable empty spaces and that extensions or restrictions of these first variable empty spaces cause a variation in the size of the housing of the second shaped elements in the first variable empty spaces and a consequent displacement in transverse direction of these second shaped elements.

According to a preferred aspect, the first and second shaped elements have an isosceles trapezoidal profile having a larger base, a smaller base and two oblique sides. Advantageously, this shape prevents the jamming of the second shaped elements in the first shaped elements and vice versa.

According to a further preferred aspect of the present disclosure, the bottom wall of the containment chamber has a length lower than the sum of the lengths of the major bases of the first shaped elements and of the second shaped elements and of the second shaped elements. Furthermore, the distance between the bottom wall and the base wall of the containment chamber is lower than the sum of the distances between the major base and the minor base of the first shaped elements and the second shaped elements. In other words, the distance between the bottom wall and the base wall of the containment chamber is lower than the sum of the heights of one of the first shaped elements and one of the second shaped elements. Consequently, the dimensions of the containment chamber cause that one or each of the second shaped elements is always at least partially housed in a respective variable empty space of the first variable empty spaces and/or that one or each of the first shaped elements is always at least partially housed in a respective variable empty space of the second variable empty spaces.

According to a further aspect, the gripping head according to the present disclosure comprises a support portion for supporting the jaws and a connection assembly configured to connect this support portion with a robot for moving the block of material. Advantageously therefore, the gripping head can be moved in various directions by the robot and the connection assembly so that the block of material can be moved in space.

Preferably, the support potion for supporting the pair of jaws comprises a clamping mechanism of the jaws wherein said clamping mechanism comprises a first sliding guide and a first carriage integral with at least one of the jaws of the pair of jaws. Said first carriage is further configured to slide in said first sliding guide. It follows that a sliding of said carriage with respect to said first sliding guide allows the clamping of the jaws and the gripping of a block of material.

According to an aspect of the present disclosure, the connection assembly of the gripping head comprises a second sliding guide, preferably arranged in a transverse direction. Preferably, moreover, said second guide is a recirculating ball guide. In other words, the gripping head according to the present disclosure is slidable transversely along the second sliding guide. The gripping of the jaws on the block of material is consequently more stable if forces, for example cutting forces, act in the transverse direction on the block of material.

According to a further aspect, the sliding of the gripping head along the second sliding guide is controlled by a positioning mechanism of the gripping head comprising a first positioning element and a second positioning element configured to come into contact with the gripping head and check the sliding of the latter along the second guide. Preferably, said first and second positioning elements are hydraulic or pneumatic pistons connected to each other through a hydraulic circuit.

The present disclosure also relates to a gripping method for gripping a block of material by means of a pair of jaws. The method comprises a step of supplying a pair of jaws wherein each jaw of the pair of jaws extends at least along a longitudinal direction and comprises a gripping portion for gripping said block of material. Furthermore, at least one of the jaws of the pair of jaws comprises a plurality of first shaped elements placed side by side, or arranged side by side, to form a first row of first shaped elements along the longitudinal direction and a plurality of first variable empty spaces each interposed between two first shaped elements. The at least one jaw of the pair of jaws further comprises a plurality of second shaped elements configured to modify the gripping portion, wherein said second shaped elements are placed side by side, or arranged side by side, to form a second row of second shaped elements along the direction longitudinal and a plurality of second variable empty spaces each interposed between two second shaped elements.

The first shaped elements also have a profile complementary to the profile of said second shaped elements. The first row of first shaped elements and the second row of second shaped elements are offset from each other and one or each of the second shaped elements is at least partially housed in a respective variable empty space of the first variable empty spaces and one o each of said first shaped elements is at least partially housed in a respective variable empty space of the second variable empty spaces. Furthermore, the second shaped elements are moved along at least one transversal direction, orthogonal to the longitudinal direction, and following a translation of said second shaped elements in the transverse direction, a translation of said first shaped elements is obtained at least in the longitudinal direction and an enlargement or restriction of said first variable empty spaces and a variation of the entity of the housing of said second shaped elements within said first variable empty spaces.

The method further comprises a step of gripping the block of material by clamping the pair of jaws through a clamping mechanism of said pair of jaws. The clamping mechanism of the pair of jaws includes a first sliding guide and a first carriage. According to this aspect, the grip of a block of material is firm regardless of the shape and/or size and/or irregularity of the block of material.

The present disclosure has as further object a robot for moving a block of material. Said movement robot comprises a main body and a movement arm in turn comprising a proximal portion and a distal portion opposite to said proximal portion. This movement arm is connected to the main body at said proximal portion. The movement robot according to the present disclosure further comprises a gripping head connected to the distal portion of said movement arm. Advantageously therefore, a block of material taken or grasped by the gripping head can be moved into space by this robot.

The present disclosure also relates to a cutting apparatus configured to cut a block of material along a transverse direction. Said cutting apparatus comprising a robot for moving the block of material and a first and a second cutting element. Said first and second cutting elements have a main development direction substantially parallel to the transverse direction. Furthermore, the second cutting element is movable along said transverse direction. According to this aspect, the cutting apparatus according to the present disclosure, thanks to the shape of the gripping head and the sliding of the gripping head along a second sliding guide, allows a stable grip of a block of material and a cut, or one splitting of the block of material itself in a transverse direction regardless of the shape and/or size and/or presence of irregularities of the block of material itself.

Finally, the present disclosure relates to a cutting method for cutting a block of material along a transverse direction. This cutting method includes a step of supplying a cutting apparatus and a step of gripping the block of material with a pair of jaws of the cutting apparatus by controlling a clamping mechanism of a pair of jaws of the cutting apparatus. The method also includes the positioning, by means of a robot of the cutting apparatus, of the block of material between the first and second cutting element of the cutting apparatus. The method comprises a step of moving the second cutting element, or upper cutting element, along the transverse direction towards the first cutting element, or lower cutting element, up to a contact between said second cutting element, or element of upper cut, and said block of material. The second cutting element, or upper cutting element, is further moved along the transverse direction towards the first cutting element, or lower cutting element, so that the gripping head of the cutting apparatus slides in a transverse direction along the second sliding guide, up to a contact between the block of material and the first cutting element, or lower cutting element. Finally, the method provides for a further movement of the second cutting element, or upper cutting element, along the transverse direction towards the first cutting element, or lower cutting element, up to the cutting, or breaking, of the block of material. According to this aspect, the cutting mechanism according to the present disclosure, thanks to the possibility of modifying the gripping surface of the gripping head of the cutting device according to the present disclosure according to the irregularities of the block of material to be grasped and to the sliding of the cutting head taken in a transverse direction along the second sliding guide, it allows to obtain a stable grip of a block of material and a cut in a transverse direction of the block of material itself regardless of the shape and/or dimensions and/or irregularities of the block of material.

According to a final aspect of the present disclosure, the step of gripping the block of material by means of the pair of jaws by controlling the clamping mechanism of the pair of jaws itself is adapted to cause a translation of the second shaped elements along the transverse direction, a translation of the first shaped elements at least in a longitudinal direction, orthogonal to said transverse direction, an enlargement or restriction of said first variable empty spaces and a variation of the entity of the housing of said second shaped elements within said first variable empty spaces.

Further advantages, characteristics and methods of use of the object of the present disclosure will become clear from the following detailed description of its embodiments, presented by way of non-limiting example.

It is however evident that each embodiment of the object of the present disclosure can have one or more of the advantages listed above; in any case it is not required that each embodiment present all the listed advantages simultaneously.

Reference will be made to the figures of the attached drawings, wherein:

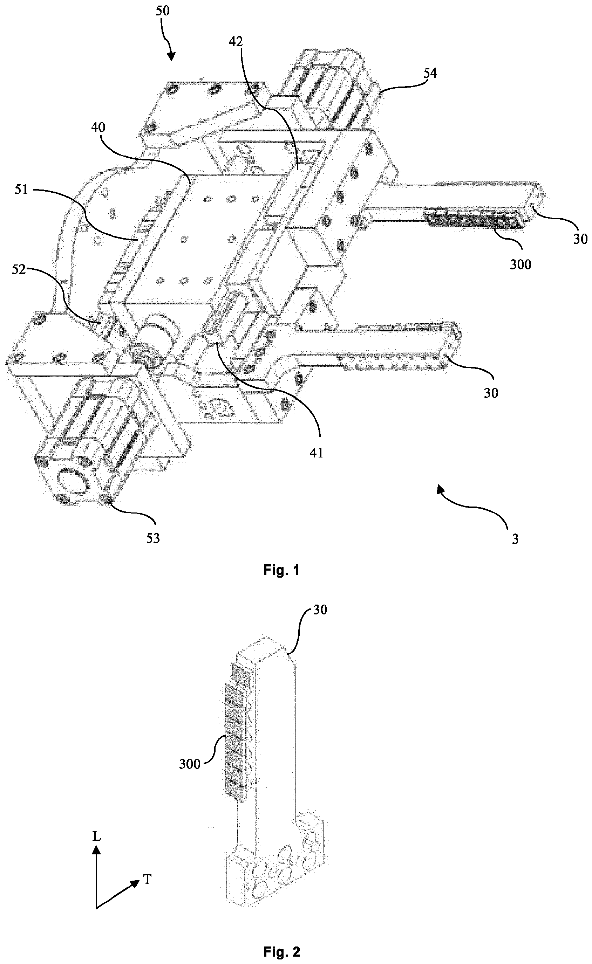

- Figure 1 represents a perspective view of a gripping head according to an embodiment of the present disclosure;
- Figure 2 represents a perspective view of a jaw of a gripping head according to an embodiment of the present disclosure;
- Figure 3 shows a section view of a pair of jaws of a gripping head according to an embodiment of the present disclosure;
- Figure 4 shows a section view of a detail of a jaw of a gripping head according to an embodiment of the present disclosure;
- Figure 5 shows a section view of a gripping head according to an embodiment of the present disclosure, wherein said gripping head is in a neutral position;
- Figure 6 shows a section view of a gripping head according to an embodiment of the present disclosure, wherein said gripping head is not in a neutral position;
- Figure 7 shows a side view of a cutting apparatus according to an embodiment of the present disclosure.

With reference to the attached figures, an embodiment of a gripping head is indicated with the reference number 3.

The expression "gripping head" means, within the scope of this disclosure, a sort of gripper, that is, a device configured to grab or grasp a block of material. This gripping head can be connected to a robot, for example for moving the block of material itself.

According to an aspect of the present disclosure, the gripping head 3 comprises a pair of jaws 30. Each of said jaws 30 extends in a main direction, that is, each of said jaws 30 has a main development direction coinciding with a longitudinal direction L.

This pair of jaws 30 is configured to take or grasp a block of material B. In particular, each jaw of the pair of jaws 30 comprises a gripping portion 300 configured to come into contact with the block of material B and for gripping the block of material B itself. In other words, the gripping portion 300 of each of the jaws of the pair of jaws 30 defines a contact surface between the jaw itself and the block of material B.

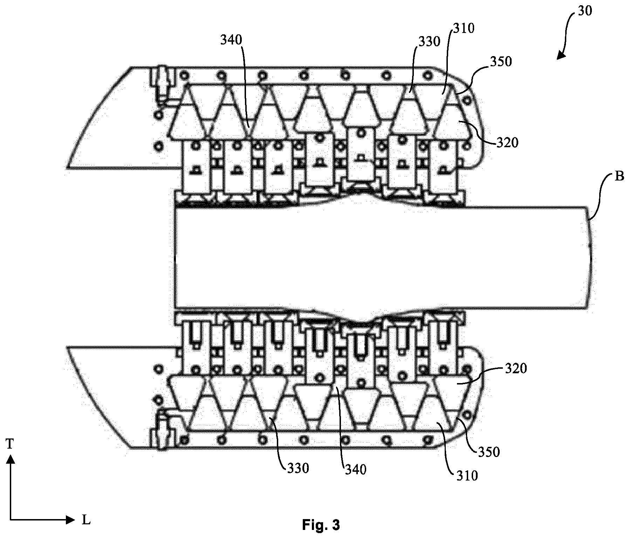

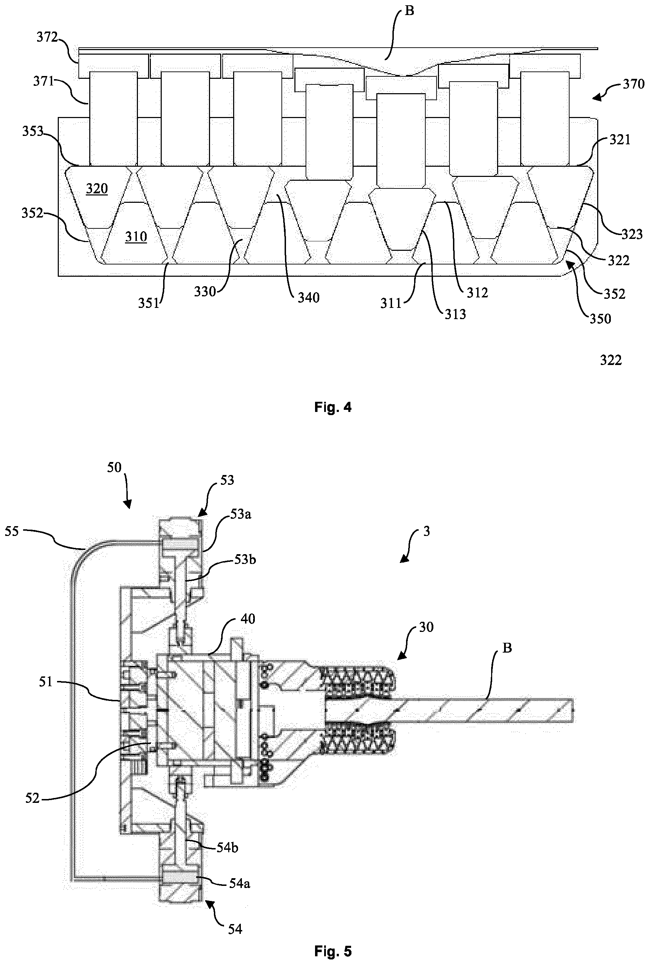

As shown in particular in Figures 3 and 4, at least one jaw of the pair of jaws 30 comprises a plurality of first shaped elements 310. These first shaped elements 310 are placed one beside another, or arranged side by side, so as to form a first row of shaped elements 310. This first row of shaped elements 310 extends along the longitudinal direction L. Furthermore, said at least one jaw of the pair of jaws 30 comprises a plurality of first variable empty spaces 330 each interposed between two adjacent shaped elements 310. In other words, the first shaped elements 310 are arranged in a row so that between two first consecutive shaped elements 310 there is a first variable empty space 330. In other words, between the first two consecutive shaped elements 310 there is a first recess of variable dimensions.

The at least one jaw of the pair of jaws 30 further comprises a plurality of second shaped elements 320 configured to modify the gripping portion 300 of the jaw of the pair of jaws 30. In particular, these second shaped elements are placed one beside another, or arranged side by side, so as to form a second row of second shaped elements 320. This second row of shaped elements 320 extends along the longitudinal direction L. Furthermore, said at least one jaw of the pair of jaws 30 comprises a plurality of second spaces variable voids 340 each interposed between two second adjacent shaped elements 320. In other words, the second shaped elements 320 are arranged in a row so that between two consecutive second shaped elements 320 there is a second variable empty space 340. In other words, between two second consecutive shaped elements 320 there is a second recess of variable dimensions.

The first shaped elements 310 and the second shaped elements 320 are shaped so that said first shaped elements 310 have a profile complementary to the profile of the second shaped elements 320. Furthermore, the configuration of the gripping head 3 according to the present disclosure is such that the first row of first shaped elements 310 and the second row of second shaped elements 320 are staggered with respect to each other in the longitudinal direction. This allows each of the second shaped elements 320 to be at least partially housed in a respective variable empty space of the first variable empty spaces 330 and that one or each of the first shaped elements 310 to be at least partially housed in a respective variable empty space of the second variable empty spaces 340.

In other words, therefore, the arrangement of the first row of first shaped elements 310 with respect to the second row of second shaped elements 320 and the profile of the first shaped elements 310 with respect to the profile of the second shaped elements 320 allow one or each of the second shaped elements 320 to be arranged at least partially in one of the first variable empty spaces 330 defined by two first shaped elements 310 in succession.

In other words, the profile of the shaped elements is such as to allow one or each of said second shaped elements 320 to be housed at least partially in one or in each of the variable empty spaces 340 defined by two first consecutive shaped elements 310 and vice versa.

According to an aspect of the present disclosure, the second shaped elements 320 are movable along at least one transverse direction T perpendicular to the longitudinal direction L. Preferably, the transverse direction T is a vertical direction. In particular, a translation or displacement of the second shaped elements 320 along this transverse direction T is configured to cause a translation of the first shaped elements 310 along at least the longitudinal direction L.

This movement of the first shaped elements 310 causes a consequent expansion or restriction of the first variable empty spaces 330. In turn, the variation in the dimensions of the first variable empty spaces 330 entails a variation in the amount of the housing of the second shaped elements 320 in the first variable blanks 330.

In other words, a movement of the second variable empty spaces 330 in a transverse direction T causes said second shaped elements 320 to be more or less housed or inserted inside the first variable empty spaces 330 with respect to an initial condition or condition of rest. This conformation makes it possible that the profile of the gripping surface, or contact surface, of the jaw can be modified. Consequently, the gripping surface, or contact surface, of the jaw with the block of material B is able to follow the profile of the block of material B itself.

In other words, the shape and/or the dimensions and/or the irregularities of the block of material B cause, during the gripping of the block of material B itself by the jaws, a movement in transverse direction T of the second shaped elements 330. Such movement in turn causes a movement of the first shaped elements 310 in the longitudinal direction L.

According to an embodiment of the present disclosure, the first and second shaped elements 310, 320 have a tapered profile. More preferably, said first and second shaped elements 310, 320 have a tapered profile in the transverse direction T, i.e. the profile of these first and second shaped elements 310, 320 narrows or widens in the transverse direction. Even more preferably, the first shaped elements 310 have a substantially isosceles trapezoidal profile having a larger base 311, a smaller base 312 and two oblique sides 313.

Similarly, the second shaped elements 320 preferably have a substantially isosceles trapezoidal profile having a larger base 321, a smaller base 322 and two oblique sides 323. In other words, this profile of the first and second shaped elements 310, 320 and the fact that the first row of shaped elements 310 and the second row of second shaped elements 320 are staggered with respect to each other so that one or each of the second shaped elements 320 is at least partially housed in a respective variable empty space of the first variable empty spaces 330 and that one or each of the first shaped elements 310 is at least partially housed in a respective variable empty space of the second variable empty spaces 340.

Even more preferably, the profile of the second shaped elements 320 is congruent with the profile of the first shaped elements 310 and the second shaped elements 320 are arranged inverted with respect to the first shaped elements 310 so that the minor base 322 of the second shaped elements 320 is housed within a variable empty space of the first variable empty spaces 330.

It also follows that extensions and restrictions of these first variable empty spaces 330 cause a variation in the size of the housing of the second shaped elements 320 within the first variable empty spaces 330 and a consequent displacement in transverse direction T of these second shaped elements 320. Vice versa, a displacement in transverse direction T of the second shaped elements 320 causes a variation of the entity of the housing of the second shaped elements 320 within the first variable empty spaces due to an expansion or restriction of the first variable empty spaces 330. Furthermore, the isosceles trapezoidal conformation of the profiles of the first and second shaped elements 310, 320 prevents the jamming of the second shaped elements 320 in the first shaped elements 310.

According to an embodiment of the present disclosure, the first shaped elements 310 and the second shaped elements 320 are contained in a containment chamber 350. In other words, the at least one of the jaws of the pair of jaws 30 of the gripping head 3 comprises a containment chamber 350 configured to contain the first shaped elements 310 and the second shaped elements 320.

More specifically, this containment chamber 350 comprises a bottom wall 351, two side walls 352 and a base wall 353. In particular, the first shaped elements 310 rest slidably on the bottom wall 351, while two of the second shaped elements 320 rest slidably on the side walls. The base wall 353 is instead configured to act as an end of stroke, or stop element, of the second shaped elements 320. In other words, the containment chamber 350 defines a region inside of which the first and second shaped elements 310, 320 can move.

It follows that the containment chamber 350 defines a region within which the first and second shaped elements 310, 320 can move.

According to an embodiment of the present disclosure, the bottom wall 351 of the containment chamber 350 has a length lower than the sum of the lengths of the major bases 311, 321 of each of the first shaped elements 310 and the second shaped elements 320. Furthermore, the distance between the bottom wall 351 and the base wall 353 of the containment chamber 350 is less than the sum of the distances between the major base 311, 321 and the minor base 312, 322 of the first and second shaped elements 310, 320.

In other words, the distance between the back wall 351 and the base wall 353 is less than the sum of the height of a first shaped element 310 and the height of a second shaped element 320.

It follows that the dimensions of the containment chamber 350 allow that one or each of the second shaped elements is always at least partially housed in a respective variable empty space of the first variable empty spaces 330 and/or that one or each of the first shaped elements 310 is always at least partially housed in a respective variable empty space of the second variable empty spaces 340.

According to an embodiment of the gripping head 3 according to the present disclosure, the at least one jaw of the pair of jaws 30 comprises a plurality of thrust elements 370 wherein each of said thrust elements 370 is in contact with, or rests on, one of the second shaped elements 320. More specifically, each of these thrust elements 370 extends mainly along the transverse direction T. That is to say that each of these thrust elements 370 comprises a main development direction parallel, or substantially parallel, to the transverse direction T. Preferably also, each thrust element 470 protrudes at least partially outside the containment chamber 350.

Preferably, the thrust elements 370 comprise a support portion 371 and a contact base 372. Specifically, each of the thrust elements 370 is in contact with, or rests on, one of the second shaped elements 320 by means of the support base 371 and protrudes at least partially outside the containment chamber 350.

The thrust elements 370 are elements, preferably cylindrical, at least partially housed within the containment chamber 350 and at least partially protruding outside the said containment chamber 370. The portion of each of the thrust elements 370 housed inside the chamber 350 containment, that is to say the support portion 371, is preferably in contact with one of the second shaped elements 320, in particular with the major base 321 of one of the second shaped elements 320. Preferably, the number of the thrust elements 370 is equal to number of second shaped elements 320.

As anticipated, each of the thrust elements 370 comprises a contact base 372, opposite to the support base 371 and configured to come into contact with the block of material B. In particular, in use, the contact base 372 is preferably in contact with block of material B.

Preferably, the contact base 372 of the thrust elements 370 is a plate-like element having a larger size than the support base 371 of the thrust elements 370 themselves. Preferably, the contact bases 372 of thrust elements 370, when placed side by side to each other, form a substantially continuous surface which defines the contact surface of one of the jaws of the pair of jaws 30 with the block of material B thus allowing to maximize the contact surface between the jaw and the block of material B.

It therefore also follows that according to this aspect, the thrust elements 370 allow the second shaped elements 320 to move within the containment chamber 350 according to the shape and/or dimensions and/or irregularities of the block of material B during the grip of the block of material B itself allows to maximize the contact surface between the jaw and the block of material.

According to an embodiment of the present disclosure, the gripping head 3 comprises a support portion 40 configured to support the pair of jaws 30. The support portion 40 can also be configured for tightening or closing the pair of jaws 30 on material block B.

In other words, the support portion 40 of the gripping head 3 can comprise a clamping mechanism of the jaws, for closing the pair of jaws 30. Preferably, the clamping mechanism of the jaws 30 of the support portion 40 comprises a first sliding guide 41 and a first carriage 42. The first carriage 42 is integral with at least one jaw of the pair of jaws 30 and is configured to slide in the first sliding guide 41. Preferably, the first carriage 42 is a recirculating ball carriage. In other words, said first carriage 42 is configured to move at least one of the jaws of the pair of jaws 30 along said first sliding guide 41. Furthermore, the clamping mechanism preferably comprises a drive system configured to move said first carriage 42 along the first sliding guide 41. The drive system can comprise any type of actuator configured to slide the first carriage 42 along the first sliding guide 41. The actuator can be for example of the hydraulic, pneumatic, electric, magnetic type .

According to a preferred embodiment, the first sliding guide 41 has a main development direction parallel or substantially parallel to the transverse direction T. Preferably furthermore, both jaws of the pair of jaws 30 are able to slide in said first sliding guide 41.

According to a further embodiment of the present disclosure, the gripping head 3 can be connected to a robot 2 for moving the block of material B in space. Preferably, the connection between the gripping head 3 and the robot 2 is obtained through a connection assembly 50. Preferably, this connection assembly 50 provides a mobile connection between the gripping head 3 and the robot 2.

In other words, according to a preferred embodiment, the gripping head 3 is connected to the robot 2 so that the relative position of the gripping head 3 with respect to the robot 2 can change. For example, according to a preferred embodiment, the gripping head 3 can slide or translate with respect to the robot 2.

In particular, according to this aspect, the connection assembly 50 comprises a second sliding guide 51, preferably arranged along the transverse direction T so that the gripping head 3 can slide along this transverse direction T. Preferably, this second guide slide 51 is a recirculating ball guide. The gripping head 3 is also connected integrally to a second carriage 52 which, in turn, is slidably mounted on the second sliding guide 51.

The sliding of the gripping head 3 on the second sliding guide 51 is preferably controlled by a positioning mechanism of the gripping head 3, preferably of the hydraulic type. Even more preferably, the positioning mechanism comprises a first positioning element 53 and a second positioning element 54 connected to the connection assembly 50 and configured to come into contact with the gripping head 3 and control its sliding in the transverse direction T along the second sliding guide 51. In other words, the positioning mechanism comprises a thrust element, or first positioning element 53, and a support element, or second positioning element 54, which control the sliding of the long gripping head 3 the second sliding guide 51.

According to a preferred embodiment, each of said first and second positioning elements 53, 54 comprises a cylinder and a piston. Specifically, the first positioning element 53 comprises a first cylinder 53a and a first piston 53b, while the second positioning element 54 comprises a second cylinder 54a and a second piston 54b. The first and second pistons 53b, 54b are housed at least partially and are slidable inside the respective first and second cylinders 53a, 54a. More specifically, each of said first and second pistons 53b, 54b, comprises a first end configured to be housed inside the respective first or second cylinder 53a, 54a and a second end configured to come into contact with the gripping head 3 .

Furthermore, the first and second positioning elements 53, 54 are mounted on the connection assembly 50 so that the first and the second piston 53b, 54b can slide inside the respective cylinders along the transverse direction T. Furthermore, preferably, the first positioning element 53 and second positioning element 54 are connected to each other through a circuit 55, preferably of the hydraulic type. More particularly, the first cylinder 53a is connected to the second cylinder 54a through said circuit 55.

In particular, according to an embodiment, when both the pistons 53b, 54b are in a completely extended position with respect to the respective cylinders 53a, 54a, the carriage 52 integral with the gripping head 3 is in the center of the second sliding guide 51, as shown in Figure 5. In this configuration, the gripping head 3 is in a neutral position with respect to the second sliding guide 51. Specifically, in this configuration, both the second ends of the pistons 53b, 54b are in contact with the gripping head 3 so as to keep the latter in a centered position with respect to the second sliding guide 51.

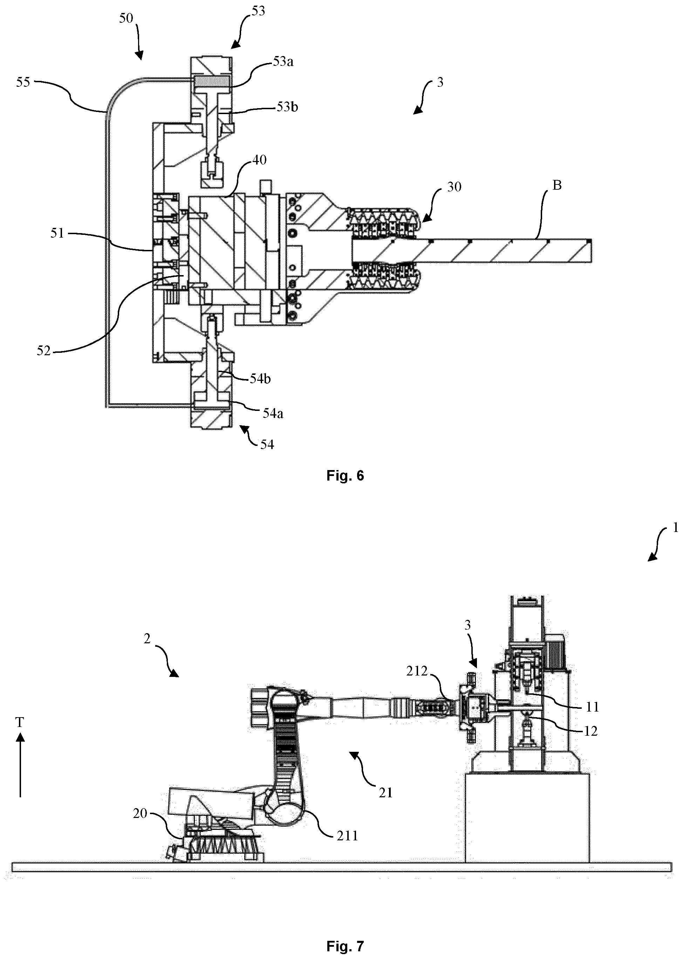

To slide the gripping head 3 along the second sliding guide 51 in the transverse direction T, a fluid is made to flow inside the hydraulic circuit 55. Specifically, in order to slide the gripping head in a transverse direction, for example towards the second positioning element 53, the fluid is flowed out of the second cylinder 54a, so that the second piston 54b flows inside the second cylinder 54a, as shown in Figure 6. The gripping head 3, being rested on the second end of the second piston 54b, slides on the second sliding guide 51 in a transverse direction T towards the second cylinder 54a. In other words, the gripping head 3 slides on the second sliding guide 51 going down by gravity towards the second cylinder 54a resting on the second end of the second piston 54b. As shown in Figure 6, moreover, the first piston 53b is in the maximum extension position with respect to its own cylinder 53a, and is no longer in contact with the gripping head 2. In this configuration, the carriage 52 integral with the gripping head 3 is not it is located in the center of the second sliding guide 51.

In order to return the carriage 52 integral with the gripping head 3 at the center of the second sliding guide, or in a neutral position, the fluid of the circuit 55 is made to flow inside the second cylinder 54a. This causes a movement of the second piston 54b in a transverse direction T towards the first positioning element 53. In turn, the second piston 54b pushes the gripping head 3 until the latter returns to contact with the second end of the first piston 53b.

The sliding of the gripping head 3 on the second sliding guide 51 allows to obtain a more stable grip of the jaws on the block of material B, especially in the case wherein forces, for example cutting forces, act on the block of material B in the direction transversal T.

The present disclosure also relates to a method of gripping a block of material B. In particular, this method comprises a step of supplying a pair of jaws 30 as described above and a step which consists in taking, or grasping, the block of material B by clamping the pair of jaws 30. This clamping step occurs by means of a clamping mechanism of said pair of jaws 30 which comprises a first sliding guide 41 and a first carriage 42.

The present disclosure has as further object a robot 2 for moving a block of material B. This movement robot 2 comprises a main body 20 and a movement arm 21. The latter in turn comprises a proximal portion 211 and a portion distal 212, opposite the proximal portion 211. The movement arm 21 is connected to the main body 20 at the proximal portion 211. Furthermore, the robot 2 comprises the gripping head 3 previously described. This gripping head 3 is connected to the distal portion 212 of the movement arm.

The present disclosure also relates to a cutting apparatus 1 configured to cut a block of material B along a transverse direction T. The cutting apparatus 1 comprises a robot 2 as previously described, a first cutting element 11, or lower cutting element , and a second cutting element 12, or upper cutting element. Said first and second cutting elements 11, 12 have a main development direction substantially parallel to said transverse direction. At least one of the two cutting elements is also movable along the transverse direction. Preferably, the second cutting element 12, or upper cutting element, is movable along the transverse direction T, while the first cutting element 11, or lower cutting element, is fixed, or not mobile, in said transverse direction T.

Finally, the present disclosure relates to a cutting method for cutting a block of material B along the transverse direction T. This cutting method comprises a step of supplying a cutting apparatus and a step of gripping the block of material through the pair of jaws 30 of the cutting apparatus 1 checking the clamping mechanism of the pair of jaws 30.

The method further comprises a positioning step, by means of the robot 2 of the cutting apparatus 1, of the block of material B between the first and the second cutting element 11, 12 of the cutting apparatus 1. The method comprises a step for moving the second cutting element 12, or upper cutting element, along the transverse direction T towards the first cutting element 11, or lower cutting element, up to a contact between said second cutting element 12, or cutting element upper, and said block of material B. The second cutting element 12, or upper cutting element, is further moved along the transverse direction T towards the first cutting element 11, or lower cutting element, so that the head of gripping 3 of the cutting apparatus 1 slides in a transverse direction T along the second sliding guide 51, until it comes into contact between the block of material B and the first cutting element 11, or lower cutting element is. Finally, the method provides for a further movement of the second cutting element 12, or upper cutting element, along the transverse direction T towards the first cutting element 11, or lower cutting element, up to the cutting, or breaking, of the block of material B.

According to this aspect, the cutting mechanism according to the present disclosure, thanks to the possibility of modifying the gripping surface of the gripping portion 300 of the pair of jaws 30 of the gripping head 3 of the cutting device 1 according to the present disclosure according to the irregularities of the block of material B to be grasped and to the sliding of the gripping head 3 in a transverse direction along the second sliding guide 51, allows to obtain a stable grip of a block of material B and a cut in a transverse direction of the block of material B itself regardless of the shape and/or size and/or irregularity of the block of material B.

According to an aspect of the present disclosure, the step of gripping the block of material B by means of the pair of jaws 30 through the control of the clamping mechanism of the pair of jaws 30 itself is adapted to cause a translation of the second shaped elements 320 along the direction transversal T, a translation of the first shaped elements 310 at least in the longitudinal direction L, an enlargement or restriction of said first variable empty spaces 330 and a variation of the entity of the housing of said second shaped elements 320 within said first variable empty spaces 330.

The object of the present disclosure has been so far described with reference to its embodiments. It is to be understood that other embodiments may exist which pertain to the same inventive core, all of which are within the scope of protection of the claims set out below.

## Claims

1. Gripping head (3) configured for gripping a block of material (B) comprising a pair of jaws (30) wherein each jaw of the pair of jaws (30) extends at least along a longitudinal direction (L) and comprises a gripping portion (300) configured for gripping said block of material (B), and wherein at least one of the jaws of the pair of jaws (30) comprises:
- a plurality of first shaped elements (310) placed one beside another, or arranged side by side, to form a first row of first shaped elements (310) along said longitudinal direction (L) and a plurality of first variable empty spaces (330) each interposed between two first shaped elements (310);
- a plurality of second shaped elements (320) configured for modifying the gripping portion (300), wherein said second shaped elements are placed one beside another, or arranged side by side, to form a second row of second shaped elements (320) along said longitudinal direction (L) and a plurality of second variable empty spaces (340) each interposed between two second shaped elements (320);
wherein said first shaped elements (310) have a profile complementary to the profile of said second shaped elements (320);
and wherein said first row of first shaped elements (310) and said second row of second shaped elements (320) are staggered with respect to one another and one or each of the second shaped elements (320) is at least partially housed in a respective variable empty space of the first variable empty spaces (330) and one or each of said first shaped elements (310) is at least partially housed in a respective variable empty space of the second variable empty spaces (340);
and wherein said second shaped elements (320) are movable along at least one transverse direction (T), orthogonal to the longitudinal direction (L), and a translation of said second shaped elements (320) in the transverse direction (T) is apt to determine a translation of said first shaped elements (310) at least in the longitudinal direction (L) and an enlargement or restriction of said first variable empty spaces (330) and a variation of the extent of the housing of said second shaped elements (320) within said first variable empty spaces (330).

2. Gripping head (3) according to claim 1, wherein the at least one of the jaws of the pair of jaws (30) comprises a containment chamber (350) configured for containing said first shaped elements (310) and said second shaped elements (320) and wherein said containing chamber (350) has a bottom wall (351) onto which said first shaped elements (310) slidably lie, two side walls (352) onto which two of the second shaped elements (320) slidably lie, and a base wall (353) configured for acting as an end of stroke for the movement of said second shaped elements (320).

3. Gripping head (3) according to one of the preceding claims, wherein the at least one of the jaws of the pair of jaws (30) comprises a plurality of thrust elements (370) wherein each of said thrust elements (370) is in contact with, or lying onto, one of the second shaped elements (320) and mainly extends along the transverse direction (T), and wherein each thrust element (370) protrudes outside the containment chamber (350).

4. Gripping head (3) according to claim 1 or 2, wherein the at least one of the jaws of the pair of jaws (30) comprises a plurality of thrust elements (370) wherein each of said thrust elements (370) comprises a support base (371) facing one of the second shaped elements (320) and a contact base (372), opposite to said support base (371), configured for coming into contact with the block of material (B) and wherein the contact bases (372) of said thrust elements (370) form a substantially continuous surface when placed one beside another.

5. Gripping head (3) according to any one of the previous claims, wherein said first shaped elements (310) and said second shaped elements (320) have a tapered profile.

6. Gripping head (3) according to claim 5, wherein said first shaped elements (310) and said second shaped elements (320) have a substantially isosceles trapezoidal profile having a major base (311, 321), a minor base (312, 322) and two oblique sides (313, 323).

7. Gripping head (3) according to claim 2 in combination with claim 6, wherein the bottom wall (351) and the base wall (353) of the containment chamber (350) have a length greater than the sum of the major bases (311, 321) of the first shaped elements (310) and of the second shaped elements (320), and wherein the distance between the bottom wall (351) and the base wall (353) of the containment chamber (350) is less than the sum of the distances between the major base (311, 321) and the minor base (312, 322) of the first shaped elements (310) and the second shaped elements (320) respectively.

8. Gripping head (3) according to any one of the preceding claims, further comprising a support portion (40) for supporting the pair of jaws (30) and a connection assembly (50) configured for connecting the support portion (40) with a robot (2) for moving a block of material (B).

9. Gripping head (3) according to the previous claim, wherein the support portion (40) for supporting the pair of jaws (30) comprises a jaw clamping mechanism.

10. Gripping head (3) according to the previous claim, wherein the jaw clamping mechanism comprises a first sliding guide (41) and a first carriage (42), integral with at least one jaw of the pair of jaws (30) and configured for sliding in said first sliding guide (41).

11. Gripping head (3) according to any one of claims 8 to 10, wherein said connection assembly (50) comprises a second sliding guide (51) for the sliding of the gripping head (3) and wherein, preferably, said second sliding guide (51) is arranged along the transverse direction (T) and is preferably a recirculating ball guide.

12. Gripping head (3) according to claim 11, comprising a positioning mechanism comprising a first positioning element (53) and a second positioning element (54) configured for coming into contact with the gripping head (3) and control its sliding along the second sliding guide (51).

13. Method for taking a block of material (B) through a pair of jaws (30), said method comprising the following steps:
- providing a pair of jaws (30) wherein each jaw of the pair of jaws (30) extends at least along a longitudinal direction (L) and comprises a gripping portion (300) configured for gripping said block of material (B) and wherein, at least one of the jaws of the pair of jaws (30) comprises:
- a plurality of first shaped elements (310) placed one beside another, or arranged side by side, to form a first row of first shaped elements (310) along said longitudinal direction (L) and a plurality of first variable empty spaces (330) each interposed between two first shaped elements (310);
- a plurality of second shaped elements (320) configured for modifying the gripping portion (300), wherein said second shaped elements are placed one beside another, or arranged side by side, to form a second row of second shaped elements (320) along said longitudinal direction (L) and a plurality of second variable empty spaces (340) each interposed between two second shaped elements (320);
wherein said first shaped elements (310) have a profile complementary to the profile of said second shaped elements (320);
and wherein said first row of first shaped elements (310) and said second row of second shaped elements (320) are staggered with respect to one another and one or each of the second shaped elements (320) is at least partially housed in a respective variable empty space of the first variable empty spaces (330) and one or each of said first shaped elements (310) is at least partially housed in a respective variable empty space of the second variable empty spaces (340);
and wherein said second shaped elements (320) are moved along at least one transverse direction (T), orthogonal to the longitudinal direction (L), and following a translation of said second shaped elements (320) in the transverse direction (T) a translation of said first shaped elements (310) at least in the longitudinal direction (L) and an enlargement or restriction of said first variable empty spaces (330) and a variation of the extent of the housing of said second shaped elements (320) within said first variable empty spaces (330) are obtained;
- gripping, or grasping, the block of material (B) by clamping said pair of jaws (30) through a clamping mechanism of said pair of jaws (30).

14. Method according to claim 13, wherein said clamping mechanism of the pair of jaws (30) comprises a first sliding guide (41) and a first carriage (42).

15. Robot (2) for moving a block of material (B) comprising:
- a main body (20),
- a movement arm (21), in turn, comprising a proximal portion (211) and a distal portion (212) opposite to said proximal portion (211), and being connected to the main body (20) at said proximal portion (211);
- a gripping head (3) according to any one of the previous claims from 1 to 12;
wherein said gripping head (3) is connected to the distal portion (212) of said movement arm (21).

16. Cutting apparatus (1) configured for cutting a block of material (B) along a transverse direction (T), said cutting apparatus (1) comprising a robot (2) according to the previous claim, a first cutting element (11), or lower cutting element, and a second cutting element (12), or upper cutting element, wherein said first and second cutting element (11, 12) have a main development direction substantially parallel to said transverse direction.

17. Cutting apparatus (1) according to the previous claim, wherein at least one of said first and said second cutting element (11, 12) is movable along said transverse direction (T).

18. Cutting apparatus (1) according to the previous claim, wherein the first transverse element (11), or lower cutting element, is fixed, or not movable, in said transverse direction (T), and wherein said second transverse element (12), or upper cutting element, is movable along said transverse direction (T).

19. Cutting method for cutting a block of material (B) along a transverse direction (T), wherein said cutting method comprises the following steps:
- supplying a cutting apparatus (1) according to any of the claims from 16 to 18;
- gripping, or grasping, the block of material (B) with the pair of jaws (30) through the clamping mechanism of the pair of jaws (30);
- positioning, by means of the robot (2), the block of material (B) between the first and the second cutting element (11, 12);
- moving the second cutting element (12), or upper cutting element, along the transverse direction towards the first cutting element (11), or lower cutting element, up to a contact between said second cutting element (12), or upper cutting element, and said block of material (B);
- further moving the second cutting element (12), or upper cutting element, along the transverse direction towards the first cutting element (11), or lower cutting element, so that the gripping head (3) moves in transverse direction (T) along the second sliding guide (51), up to a contact between the block of material (B) and the first cutting element (11), or lower cutting element;
- further moving the second cutting element (12), or upper cutting element, along the transverse direction towards the first cutting element (11), or lower cutting element, until cut, or break, of the block of material (B).

20. Cutting method for cutting a block of material (B) along a transverse direction (T) according to the preceding claim, wherein the step of gripping the block of material (B) with the pair of jaws (30) through the clamping mechanism of the pair of jaws (30) is apt to determine a translation of the second shaped elements (320) along the transverse direction (T), a translation of the first shaped elements (310) at least in a longitudinal direction (L), orthogonal to said transverse direction (T), an enlargement or restriction of said first variable empty spaces (330) and a variation of the extent of the housing of said second shaped elements (320) within said first variable empty spaces (330).

## Patentansprüche

1. Greifkopf (3), der zum Ergreifen eines Materialblocks (B) ausgelegt ist, mit einem Paar Backen (30), wobei jede Backe des Paares der Backen (30) sich mindestens entlang einer Längsrichtung (L) erstreckt und einen Greifabschnitt (300) aufweist, der zum Ergreifen des Materialblocks (B) ausgelegt ist, und wobei mindestens eine der Backen des Paares der Backen (30) Folgendes aufweist:
- eine Vielzahl von ersten Formelementen (310), die nebeneinander platziert oder Seite an Seite angeordnet sind, um eine erste Reihe aus ersten Formelementen (310) entlang der Längsrichtung (L) zu bilden, und eine Vielzahl von ersten variablen Leerräumen (330), die sich jeweils zwischen zwei ersten Formelementen (310) befinden;
- eine Vielzahl von zweiten Formelementen (320), die die dafür ausgelegt sind, den Greifabschnitt (300) zu modifizieren, wobei die zweiten Formelemente nebeneinander platziert oder Seite an Seite angeordnet sind, um eine zweite Reihe aus zweiten Formelementen (320) entlang der Längsrichtung (L) zu bilden, und eine Vielzahl von zweiten variablen Leerräumen (340), die sich jeweils zwischen zwei zweiten Formelementen (320) befinden;
wobei die ersten Formelemente (310) ein Profil haben, das zum Profil der zweiten Formelemente (320) komplementär ist;
und wobei die ersten Reihe aus ersten Formelementen (310) und die zweite Reihe aus zweiten Formelementen (320) in Bezug aufeinander versetzt sind und eines oder jedes der zweiten Formelemente (320) mindestens teilweise in einem jeweiligen variablen Leerraum der ersten variablen Leerräume (330) aufgenommen ist bzw. sind, und eines oder jedes der ersten Formelemente (310) mindestens teilweise in einem jeweiligen variablen Leerraum der zweiten variablen Leerräume (340) aufgenommen ist bzw. sind;
und wobei die zweiten Formelemente (320) entlang mindestens einer Querrichtung (T) orthogonal zur Längsrichtung (L) bewegbar sind und eine Verschiebung der zweiten Formelemente (320) in der Querrichtung (T) dazu fähig ist, eine Verschiebung der ersten Formelemente (310) mindestens in der Längsrichtung (L) und eine Vergrößerung oder Einengung der ersten variablen Leerräume (330) und eine Veränderung des Ausmaßes der Aufnahme der zweiten Formelemente (320) innerhalb der ersten variablen Leerräume (330) zu bestimmen.

2. Greifkopf (3) nach Anspruch 1, wobei die mindestens eine der Backen des Paares der Backen (30) eine Einschlusskammer (350) aufweist, die dafür ausgelegt ist, die ersten Formelemente (310) und zweiten Formelemente (320) zu enthalten, und wobei die Einschlusskammer (350) eine Bodenwand (351), auf der die ersten Formelemente (310) verschiebbar aufliegen, zwei Seitenwände (352), an der zwei der zweiten Formelemente (320) verschiebbar aufliegen, und eine Basiswand (353) hat, die dafür ausgelegt ist, als Ende des Hubs für die Bewegung der zweiten Formelemente (320) zu wirken.

3. Greifkopf (3) nach einem der vorhergehenden Ansprüche, wobei die mindestens eine der Backen des Paares der Backen (30) eine Vielzahl von Schubelementen (370) aufweist, wobei jedes der Schubelemente (370) mit einem der zweiten Formelemente (320) in Kontakt ist oder auf diesem aufliegt und sich im Wesentlichen entlang der Querrichtung (T) erstreckt, und wobei jedes Schubelement (370) aus der Einschlusskammer (350) nach außen vorsteht.

4. Greifkopf (3) nach Anspruch 1 oder 2, wobei die mindestens eine der Backen des Paares der Backen (30) eine Vielzahl von Schubelementen (370) aufweist, wobei jedes der Schubelemente (370) eine Stützbasis (371), die einem der zweiten Formelemente (320) zugewandt ist, und eine Kontaktbasis (372) gegenüber der Stützbasis (371) aufweist, die dafür ausgelegt ist, mit dem Materialblocks (B) in Kontakt zu gelangen, und wobei die Kontaktbasen (372) der Schubelemente (370) eine im Wesentlichen durchgehende Oberfläche bilden, wenn sie nebeneinander platziert sind.

5. Greifkopf (3) nach einem der vorhergehenden Ansprüche, wobei die ersten Formelemente (310) und die zweiten Formelemente (320) ein sich verjüngendes Profil haben.

6. Greifkopf (3) nach Anspruch 5, wobei die ersten Formelemente (310) und die zweiten Formelemente (320) ein im Wesentlichen gleichschenkliges trapezförmiges Profil mit einer Hauptbasis (311, 321), einer Nebenbasis (312, 322) und zwei schrägen Seiten (313, 323) haben.

7. Greifkopf (3) nach Anspruch 2 in Kombination mit Anspruch 6, wobei die Bodenwand (351) und die Basiswand (353) der Einschlusskammer (350) eine Länge haben, die größer als die Summe der Hauptbasen (311, 321) der ersten Formelemente (310) und zweiten Formelemente (320) ist, und wobei der Abstand zwischen der Bodenwand (351) und der Basiswand (353) der Einschlusskammer (350) kleiner als die Summe der Abstände zwischen der Hauptbasis (311, 321) und der Nebenbasis (312, 322) der ersten Formelemente (310) bzw. zweiten Formelemente (320) ist.

8. Greifkopf (3) nach einem der vorhergehenden Ansprüche, darüber hinaus mit einem Tragabschnitt (40) zum Tragen des Paares der Backen (30) und einer Verbindungsanordnung (50), die dafür ausgelegt ist, den Tragabschnitt (40) mit einem Roboter (2) zum Bewegen eines Materialblocks (B) zu verbinden.

9. Greifkopf (3) nach dem vorhergehenden Anspruch, wobei der Tragabschnitt (40) zum Tragen des Paares der Backen (30) einen Backenklemmmechanismus aufweist.

10. Greifkopf (3) nach dem vorhergehenden Anspruch, wobei der Backenklemmmechanismus eine erste Gleitführung (41) und einen ersten Schlitten (42) aufweist, der mit mindestens einer Backe des Paares der Backen (30) einstückig ausgeführt und dafür ausgelegt ist, in der ersten Gleitführung (41) zu gleiten.

11. Greifkopf (3) nach einem der Ansprüche 8 bis 10, wobei die Verbindungsanordnung (50) eine zweite Gleitführung (51) für das Gleiten des Greifkopfs (3) aufweist und wobei vorzugsweise die zweite Gleitführung (51) entlang der Querrichtung (T) angeordnet ist und vorzugsweise eine Kugelumlaufführung darstellt.

12. Greifkopf (3) nach Anspruch 11, mit einem Positionierungsmechanismus, der ein erstes Positionierungselement (53) und ein zweites Positionierungselement (54) aufweist, die dafür ausgelegt sind, mit dem Greifkopf (3) in Kontakt zu gelangen und sein Gleiten entlang der zweiten Gleitführung (51) zu steuern.

13. Verfahren zum Aufnehmen eines Materialblocks (B) durch ein Paar Backen (30), wobei das Verfahren die folgenden Schritte umfasst:
- Bereitstellen eines Paares von Backen (30), wobei jede Backe des Paares der Backen (30) sich mindestens entlang einer Längsrichtung (L) erstreckt und einen Greifabschnitt (300) aufweist, der zum Ergreifen des Materialblocks (B) ausgelegt ist, und wobei mindestens eine der Backen des Paares der Backen (30) Folgendes aufweist:
- eine Vielzahl von ersten Formelementen (310), die nebeneinander platziert oder Seite an Seite angeordnet sind, um eine erste Reihe aus ersten Formelementen (310) entlang der Längsrichtung (L) zu bilden, und eine Vielzahl von ersten variablen Leerräumen (330), die sich jeweils zwischen zwei ersten Formelementen (310) befinden;
- eine Vielzahl von zweiten Formelementen (320), die dafür ausgelegt sind, den Greifabschnitt (300) zu modifizieren, wobei die zweiten Formelemente nebeneinander platziert oder Seite an Seite angeordnet sind, um eine zweite Reihe aus zweiten Formelementen (320) entlang der Längsrichtung (L) zu bilden, und eine Vielzahl von zweiten variablen Leerräumen (340), die sich jeweils zwischen zwei zweiten Formelementen (320) befinden;
wobei die ersten Formelemente (310) ein Profil haben, das zum Profil der zweiten Formelemente (320) komplementär ist;
und wobei die ersten Reihe aus ersten Formelementen (310) und die zweite Reihe aus zweiten Formelementen (320) in Bezug aufeinander versetzt sind und eines oder jedes der zweiten Formelemente (320) mindestens teilweise in einem jeweiligen variablen Leerraum der ersten variablen Leerräume (330) aufgenommen ist bzw. sind, und eines oder jedes der ersten Formelemente (310) mindestens teilweise in einem jeweiligen variablen Leerraum der zweiten variablen Leerräume (340) aufgenommen ist bzw. sind;
und wobei die zweiten Formelemente (320) entlang mindestens einer Querrichtung (T) orthogonal zur Längsrichtung (L) bewegt werden und, nach einer Verschiebung der zweiten Formelemente (320) in der Querrichtung (T), eine Verschiebung der ersten Formelemente (310) mindestens in der Längsrichtung (L) und eine Vergrößerung oder eine Einengung der ersten variablen Leerräume (330) sowie eine Veränderung des Ausmaßes der Aufnahme der zweiten Formelemente (320) innerhalb der ersten variablen Leerräume (330) erhalten werden;
- Ergreifen oder Fassen des Materialblocks (B) durch Anpressen des Paares der Backen (30) durch einen Klemmmechanismus des Paares der Backen (30).

14. Verfahren nach Anspruch 13, wobei der Klemmmechanismus des Paares der Backen (30) eine erste Gleitführung (41) und einen ersten Schlitten (42) aufweist.

15. Roboter (2) zum Bewegen eines Materialblocks (B), aufweisend:
- einen Hauptteil (20),
- einen Bewegungsarm (21), der seinerseits einen proximalen Abschnitt (211) und einen distalen Abschnitt (212) entgegengesetzt zum proximalen Abschnitt (211) aufweist, und der am proximalen Abschnitt (211) mit dem Hauptteil (20) verbunden ist;
- einen Greifkopf (3) nach einem der vorhergehenden Ansprüche 1 bis 12;
wobei der Greifkopf (3) mit dem distalen Abschnitt (212) des Bewegungsarms (21) verbunden ist.

16. Schneidvorrichtung (1), die zum Schneiden eines Materialblocks (B) entlang einer Querrichtung (T) ausgelegt ist, wobei die Schneidvorrichtung (1) einen Roboter (2) nach dem vorhergehenden Anspruch, ein erstes Schneidelement (11) oder unteres Schneidelement und ein zweites Schneidelement (12) oder oberes Schneidelement aufweist, wobei das erste und zweite Schneidelement (11, 12) eine Hauptausbildungsrichtung im Wesentlichen parallel zur Querrichtung haben.

17. Schneidvorrichtung (1) nach dem vorhergehenden Anspruch, wobei das erste und/oder zweite Schneidelement (11, 12) entlang der Querrichtung (T) bewegbar sind.

18. Schneidvorrichtung (1) nach dem vorhergehenden Anspruch, wobei das erste Querelement (11) oder untere Schneidelement in der Querrichtung (T) feststehend und nicht bewegbar ist, und wobei das zweite Querelement (12) oder obere Schneidelement entlang der Querrichtung (T) bewegbar ist.

19. Schneidverfahren zum Schneiden eine Materialblocks (B) entlang einer Querrichtung (T), wobei das Schneidverfahren die folgenden Schritte umfasst:
- Bereitstellen einer Schneidvorrichtung (1) nach einem der Ansprüche 16 bis 18;
- Ergreifen oder Fassen des Materialblocks (B) mit dem Paar der Backen (30) durch den Klemmmechanismus des Paares der Backen (30);
- Positionieren, mithilfe des Roboters (2), des Materialblocks (B) zwischen dem ersten und zweiten Schneidelement (11, 12);
- Bewegen des zweiten Schneidelements (12) oder oberen Schneidelements entlang der Querrichtung zum ersten Schneidelement (11) oder unteren Schneidelement bis zu einem Kontakt zwischen dem zweiten Schneidelement (12) oder oberen Schneidelement und dem Materialblock (B);
- weiteres Bewegen des zweiten Schneidelements (12) oder oberen Schneidelements entlang der Querrichtung zum ersten Schneidelement (11) oder unteren Schneidelement, so dass sich der Greifkopf (3) in Querrichtung (T) entlang der zweiten Gleitführung (51) bis zu einem Kontakt zwischen dem Materialblock (B) und dem ersten Schneidelement (11) oder unteren Schneidelement bewegt;
- weiteres Bewegen des zweiten Schneidelements (12) oder oberen Schneidelements entlang der Querrichtung zum ersten Schneidelement (11) oder unteren Schneidelement bis zum Zerschneiden oder Brechen des Materialblocks (B).

20. Schneidverfahren zum Schneiden eines Materialblocks (B) entlang einer Querrichtung (T) gemäß dem vorhergehenden Anspruch, wobei der Schritt des Ergreifens des Materialblocks (B) mit dem Paar der Backen (30) durch den Klemmmechanismus des Paares der Backen (30) dazu fähig ist, eine Verschiebung der zweiten Formelemente (320) entlang der Querrichtung (T), eine Verschiebung der ersten Formelemente (310) mindestens in einer Längsrichtung (L) orthogonal zur Querrichtung (T), eine Vergrößerung oder Einengung der ersten variablen Leerräume (330) sowie eine Veränderung des Ausmaßes der Aufnahme der zweiten Formelemente (320) innerhalb der ersten variablen Leerräume (330) zu bestimmen.

## Revendications

1. Tête de préhension (3) configurée pour saisir un bloc de matériau (B) comprenant une paire de mâchoires (30), dans laquelle chaque mâchoire de la paire de mâchoires (30) s'étend au moins le long d'une direction longitudinale (L) et comprend une partie de préhension (300) configurée pour saisir ledit bloc de matériau (B), et dans laquelle au moins l'une des mâchoires de la paire de mâchoires (30) comprend :
une pluralité de premiers éléments façonnés (310) placés les uns à côté des autres, ou agencés côte à côte, pour former une première rangée de premiers éléments façonnés (310) le long de ladite direction longitudinale (L) et une pluralité de premiers espaces vides variables (330), chacun intercalé entre deux premiers éléments façonnés (310) ;
une pluralité de seconds éléments façonnés (320) configurés pour modifier la partie de préhension (300), dans laquelle lesdits seconds éléments façonnés sont placés les uns à côté des autres, ou agencés côte à côte, pour former une seconde rangée de seconds éléments façonnés (320) le long de ladite direction longitudinale (L) et une pluralité de seconds espaces vides variables (340), chacun intercalé entre deux seconds éléments façonnés (320) ;
dans laquelle lesdits premiers éléments façonnés (310) ont un profil complémentaire au profil desdits seconds éléments façonnés (320) ;
et dans laquelle ladite première rangée de premiers éléments façonnés (310) et ladite seconde rangée de seconds éléments façonnés (320) sont en quinconce l'une par rapport à l'autre et un ou chacun des seconds éléments façonnés (320) est au moins partiellement logé dans un espace vide variable respectif des premiers espaces vides variables (330) et un ou chacun desdits premiers éléments façonnés (310) est au moins partiellement logé dans un espace vide variable respectif des seconds espaces vides variables (340) ;
et dans lequel lesdits seconds éléments façonnés (320) sont mobiles le long d'au moins une direction transversale (T), orthogonale à la direction longitudinale (L), et une translation desdits seconds éléments façonnés (320) dans la direction transversale (T) est apte à déterminer une translation desdits premiers éléments façonnés (310) au moins dans la direction longitudinale (L) et un agrandissement ou une restriction desdits premiers espaces vides variables (330) et une variation de l'étendue de la réception desdits seconds éléments façonnés (320) dans lesdits premiers espaces vides variables (330).

2. Tête de préhension (3) selon la revendication 1, dans laquelle la au moins une des mâchoires de la paire de mâchoires (30) comprend une chambre de confinement (350) configurée pour contenir lesdits premiers éléments façonnés (310) et lesdits seconds éléments façonnés (320) et dans laquelle ladite chambre de confinement (350) a une paroi inférieure (351) sur laquelle lesdits premiers éléments façonnés (310) s'appuient de manière coulissante, deux parois latérales (352) sur lesquelles deux des seconds éléments façonnés (320) s'appuient de manière coulissante, et une paroi de base (353) configurée pour servir de fin de course pour le mouvement desdits seconds éléments façonnés (320).

3. Tête de préhension (3) selon l'une des revendications précédentes, dans laquelle la au moins une des mâchoires de la paire de mâchoires (30) comprend une pluralité d'éléments de poussée (370), dans laquelle chacun desdits éléments de poussée (370) est en contact avec ou s'appuie sur l'un des seconds éléments façonnés (320) et s'étend principalement le long de la direction transversale (T), et dans laquelle chaque élément de poussée (370) fait saillie à l'extérieur de la chambre de confinement (350).

4. Tête de préhension (3) selon la revendication 1 ou 2, dans laquelle la au moins une des mâchoires de la paire de mâchoires (30) comprend une pluralité d'éléments de poussée (370), dans laquelle chacun desdits éléments de poussée (370) comprend un support de base (371) faisant face à l'un des seconds éléments façonnés (320) et une base de contact (372), opposée à ladite base de support (371), configurée pour venir en contact avec le bloc de matériau (B) et dans laquelle les bases de contact (372) desdits éléments de poussée (370) forment une surface sensiblement continue lorsqu'elles sont placées les unes à côté des autres.

5. Tête de préhension (3) selon l'une quelconque des revendications précédentes, dans laquelle lesdits premiers éléments façonnés (310) et lesdits seconds éléments façonnés (320) ont un profil progressivement rétréci.

6. Tête de préhension (3) selon la revendication 5, dans laquelle lesdits premiers éléments façonnés (310) et lesdits seconds éléments façonnés (320) ont une profil trapézoïdal sensiblement isocèle ayant une base majeure (311, 321), une base mineure (312, 322) et deux côtés obliques (313, 323).

7. Tête de préhension (3) selon la revendication 2 en combinaison avec la revendication 6, dans laquelle la paroi inférieure (351) et la paroi de base (353) de la chambre de confinement (350) ont une longueur supérieure à la somme des bases majeures (311, 321) des premiers éléments façonnés (310) et des seconds éléments façonnés (320), et dans laquelle la distance entre la paroi inférieure (351) et la paroi de base (353) de la chambre de confinement (350) est inférieure à la somme des distances entre la base majeure (311, 321) et la base mineure (312, 322) des premiers éléments façonnés (310) et des seconds éléments façonnés (320) respectivement.

8. Tête de préhension (3) selon l'une quelconque des revendications précédentes, comprenant en outre une partie de support (40) pour supporter la paire de mâchoires (30) et un ensemble de raccordement (50) configuré pour raccorder la partie de support (40) avec un robot (2) pour déplacer un bloc de matériau (B).

9. Tête de préhension (3) selon la revendication précédente, dans laquelle la partie de support (40) pour supporter la paire de mâchoires (30) comprend un mécanisme de serrage de mâchoires.

10. Tête de préhension (3) selon la revendication précédente, dans laquelle le mécanisme de serrage de mâchoires comprend un premier guide coulissant (41) et un premier chariot (42) solidaire avec au moins une mâchoire de la paire de mâchoires (30) et configuré pour coulisser dans ledit premier guide coulissant (41).

11. Tête de préhension (3) selon l'une quelconque des revendications 8 à 10, dans laquelle ledit ensemble de raccordement (50) comprend un second guide coulissant (51) pour le coulissement de la tête de préhension (3) et dans laquelle, de préférence, ledit second guide coulissant (51) est agencé le long de la direction transversale (T) et est de préférence un guide à recirculation de billes.

12. Tête de préhension (3) selon la revendication 11, comprenant un mécanisme de positionnement comprenant un premier élément de positionnement (53) et un second élément de positionnement (54) configurés pour venir en contact avec la tête de préhension (3) et contrôler son coulissement le long du second guide coulissant (51).

13. Procédé pour prendre un bloc de matériau (B) par le biais d'une paire de mâchoires (30), ledit procédé comprenant les étapes suivantes consistant à :
prévoir une paire de mâchoires (30), dans lequel chaque mâchoire de la paire de mâchoires (30) s'étend au moins le long d'une direction longitudinale (L) et comprend une partie de préhension (300) configurée pour saisir ledit bloc de matériau (B) et dans lequel, au moins l'une des mâchoires de la paire de mâchoires (30) comprend :
une pluralité de premiers éléments façonnés (310) placés les uns à côté des autres ou agencés côte à côte, pour former une première rangée de premiers éléments façonnés (310) le long de ladite direction longitudinale (L) et une pluralité de premiers espaces vides variables (330), chacun intercalé entre deux premiers éléments façonnés (310) ;
une pluralité de seconds éléments façonnés (320) configurés pour modifier la partie de préhension (300), dans lequel lesdits seconds éléments façonnés sont placés les uns à côté des autres ou agencés côte à côte, pour former une seconde rangée de seconds éléments façonnés (320) le long de ladite direction longitudinale (L) et une pluralité de seconds espaces vides variables (340), chacun intercalé entre deux seconds éléments façonnés (320) ;
dans lequel lesdits premiers éléments façonnés (310) ont un profil complémentaire du profil desdits seconds éléments façonnés (320) ;
et dans lequel ladite première rangée de premiers éléments façonnés (310) et ladite seconde rangée de seconds éléments façonnés (320) sont en quinconce l'une par rapport à l'autre et un ou chacun des seconds éléments façonnés (320) est au moins partiellement logé dans un espace vide variable respectif des premiers espaces vides variables (330) et un ou chacun desdits premiers éléments façonnés (310) est au moins partiellement logé dans un espace vide variable respectif des seconds espaces vides variables (340) ;
et dans lequel lesdits seconds éléments façonnés (320) sont déplacés le long d'au moins une direction transversale (T), orthogonale à la direction longitudinale (L), et suite à une translation desdits seconds éléments façonnés (320) dans la direction transversale (T), une translation desdits premiers éléments façonnés (310) au moins dans la direction longitudinale (L) et un agrandissement ou une restriction desdits premiers espaces vides variables (330) et une variation de l'étendue de la réception desdits seconds éléments façonnés (320) dans lesdits premiers espaces vides variables (330) sont obtenus ;
saisir ou attraper le bloc de matériau (B) en serrant ladite paire de mâchoire (30) par le biais d'un mécanisme de serrage de ladite paire de mâchoires (30).

14. Procédé selon la revendication 13, dans lequel ledit mécanisme de serrage de la paire de mâchoires (30) comprend un premier guide coulissant (41) et un premier chariot (42).

15. Robot (2) pour déplacer un bloc de matériau (B) comprenant :
un corps principal (20),
un bras de mouvement (21) comprenant, à son tour, une partie proximale (211) et une partie distale (212) opposée à ladite partie proximale (211) et étant raccordé au corps principal (20) au niveau de ladite partie proximale (211) ;
une tête de préhension (3) selon l'une quelconque des revendications 1 à 12 ;
dans lequel ladite tête de préhension (3) est raccordée à la partie distale (212) dudit bras de mouvement (21).

16. Appareil de coupe (1) configuré pour couper un bloc de matériau (B) le long d'une direction transversale (T), ledit appareil de coupe (1) comprenant un robot (2) selon la revendication précédente, un premier élément de coupe (11) ou élément de coupe inférieur et un second élément de coupe (12) ou élément de coupe supérieur, dans lequel lesdits premier et second éléments de coupe (11, 12) ont une direction de développement principale sensiblement parallèle à ladite direction transversale.

17. Appareil de coupe (1) selon la revendication précédente, dans lequel au moins l'un parmi lesdits premier et second éléments de coupe (11, 12) est mobile le long de ladite direction transversale (T).

18. Appareil de coupe (1) selon la revendication précédente, dans lequel le premier élément transversal (11) ou élément de coupe inférieur, est fixé ou n'est pas mobile dans ladite direction transversale (T) ou dans lequel ledit second élément transversal (12) ou élément de coupe supérieur, est mobile le long de ladite direction transversale (T).

19. Procédé de coupe pour couper un bloc de matériau (B) le long d'une direction transversale (T), dans lequel ledit procédé de coupe comprend les étapes suivantes consistant à :
fournir un appareil de coupe (1) selon l'une quelconque des revendications 16 à 18 ;
saisir ou attraper le bloc de matériau (B) avec la paire de mâchoires (30) par le biais du mécanisme de serrage de la paire de mâchoires (30) ;
positionner, au moyen du robot (2), le bloc de matériau (B) entre le premier et le second élément de coupe (11, 12) ;
déplacer le second élément de coupe (12) ou élément de coupe supérieur, le long de la direction transversale vers le premier élément de coupe (11) ou élément de coupe inférieur, jusqu'à un contact entre ledit second élément de coupe (12) ou élément de coupe supérieur, et ledit bloc de matériau (B) ;
déplacer ultérieurement le second élément de coupe (12) ou élément de coupe supérieur le long de la direction transversale vers le premier élément de coupe (11) ou élément de coupe inférieur, de sorte que la tête de préhension (3) se déplace dans la direction transversale (T) le long du second guide coulissant (51), jusqu'à un contact entre le bloc de matériau (B) et le premier élément de coupe (11) ou élément de coupe inférieur ;
déplacer ultérieurement le second élément de coupe (12) ou élément de coupe supérieur, le long de la direction transversale vers le premier élément de coupe (11) ou élément de coupe inférieur, jusqu'à la coupe ou la rupture du bloc de matériau (B).

20. Procédé de coupe pour couper un bloc de matériau (B) le long d'une direction transversale (T) selon la revendication précédente, dans lequel l'étape consistant à saisir le bloc de matériau (B) avec la paire de mâchoires (30) par le biais du mécanisme de serrage de la paire de mâchoires (30) est apte à déterminer une translation des seconds éléments façonnés (320) le long de la direction transversale (T), une translation des premiers éléments façonnés (310) au moins dans le direction longitudinale (L), orthogonale à ladite direction transversale (T), un agrandissement ou une restriction desdits premiers espaces vides variables (330) et une variation de l'étendue de la réception desdits seconds éléments façonnés (320) dans lesdits premiers espaces vides variables (330).
